# EUROPEAN PATENT APPLICATION

(11) **EP 3 133 468 A1**
(43) Date of publication of application: **22.02.2017**
(21) Application number: 16182536.9
(22) Date of filing: 03.08.2016
(51) Int. Cl.: G06F 3/01, G02B 27/01

(54) **VIRTUAL REALITY HEADSET FOR NOTIFYING AN OBJECT AND METHOD THEREOF**

(30) Priority: 17.08.2015 US 201514828107; 18.03.2016 KR 20160032975
(71) Applicant: Samsung Electronics Co., Ltd., Suwon-si, Gyeonggi-do 16677 (KR)
(72) Inventor: YOON, Suk Hwan, Sunnyvale, CA California 94087 (US); KUDAIMI, Waddah, San Jose, CA California 95124 (US)
(74) Representative: Jenkins, Richard Gavin

(57) **Abstract**

A Virtual Reality (VR) headset can include a controller, and a display operatively coupled with the controller. The display can display contents. When at least one sensor operatively coupled with the VR headset detects an object within a designated area, the controller can notify that the object is detected.

## Description

### TECHNICAL FIELD OF THE INVENTION

The present disclosure relates generally to a Virtual Reality (VR) headset. More particularly, the present disclosure relates to a VR headset for notifying an object to its user, and a method thereof.

### BACKGROUND OF THE INVENTION

A Virtual Reality (VR) headset is prevalently used for entertainment purposes, training purposes, and commercial purposes. A user wears the VR headset on his/her head. Using the VR headset, the user can experience VR through a software application executed. The VR headset projects three-dimensional (3D) images of the software application onto its display. However, when contents of the software application are executed, the user cannot see what happens around him/her. For example, the user is apt to run into objects such as passersby, pets, furniture, or walls, or to come close to the objects without recognizing them.

In this regard, what is needed is a VR headset and its operating method for allowing a user to recognize an object around the user. In particular, the VR headset and its operating method are demanded to notify objects around the user, to the user.

### SUMMARY OF THE INVENTION

To address the above-discussed deficiencies of the prior art, it is a primary aspect of the present disclosure to provide a Virtual Reality (VR) headset for detecting an object around a user and notifying the object, and a method thereof.

According to one aspect of the present disclosure, a VR headset can include a controller, and a display operatively coupled with the controller. The display can display contents. When at least one sensor operatively coupled with the VR headset detects an object within a designated area, the controller can notify that the object is detected.

According to another aspect of the present disclosure, a method for operating a VR headset can include displaying contents, and, when detecting an object within a designated area through at least one sensor operatively coupled with the VR headset, notifying that the object is detected.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present disclosure will be more apparent from the following description taken in conjunction with the accompanying drawings, in which:
FIG. 1 illustrates surroundings of a user wearing a Virtual Reality (VR) headset according to an embodiment of the present disclosure;
FIG. 2A illustrates a state of a VR headset including at least one sensor according to an embodiment of the present disclosure;
FIG. 2B illustrates another state of a VR headset including at least one sensor according to an embodiment of the present disclosure;
FIG. 2C illustrates yet another state of a VR headset including at least one sensor according to an embodiment of the present disclosure;
FIG. 3A illustrates a screen of a VR headset notifying an object according to an embodiment of the present disclosure;
FIG. 3B illustrates a screen of a VR headset notifying another object according to an embodiment of the present disclosure;
FIG. 3C illustrates a screen of a VR headset notifying yet another object according to an embodiment of the present disclosure;
FIG. 3D illustrates a screen of a VR headset notifying still another object according to an embodiment of the present disclosure;
FIG. 3E illustrates a screen of a VR headset notifying a further object according to an embodiment of the present disclosure;
FIG. 3F illustrates a screen of a VR headset notifying a further object according to an embodiment of the present disclosure;
FIG. 4A illustrates a VR headset screen displaying a notification based on a distance between an object and a VR headset according to an embodiment of the present disclosure;
FIG. 4B illustrates a VR headset screen displaying another notification based on a distance between an object and a VR headset according to an embodiment of the present disclosure;
FIG. 5 illustrates at least one sensor and a VR headset according to an embodiment of the present disclosure;
FIG. 6 illustrates an operating method of a VR headset according to an embodiment of the present disclosure;
FIG. 7 illustrates another operating method of a VR headset according to an embodiment of the present disclosure;
FIG. 8 illustrates yet another operating method of a VR headset according to an embodiment of the present disclosure;
FIG. 9 illustrates a signal flow between at least one sensor and a VR headset according to an embodiment of the present disclosure; and
FIG. 10 illustrates another signal flow between at least one sensor and a VR headset according to an embodiment of the present disclosure.

Throughout the drawings, like reference numerals will be understood to refer to like parts, components and structures.

### DETAILED DESCRIPTION OF THE INVENTION

Before undertaking the detailed description below, it may be advantageous to set forth definitions of certain words and phrases used throughout this patent document. The terms "include" and "comprise," as well as derivatives thereof, mean inclusion without limitation. The term "or," is inclusive, meaning and/or. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. The term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document. Those of ordinary skill in the art should understand that in many, if not most instances, such definitions apply to prior, as well as future uses of such defined words and phrases.

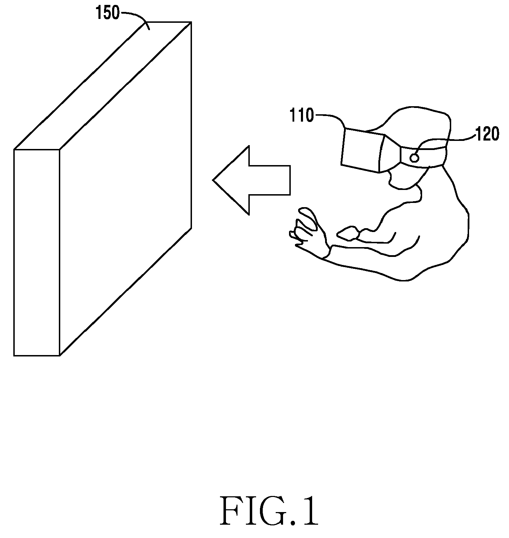

FIGS. 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged Virtual Reality (VR) headset.

The present disclosure provides a VR headset and its operating method for, when a user is in VR without seeing an object, giving user visual and audible notifications of the object. Using the visual and audible notifications, the user can notice the object without taking off the VR headset or activating a camera to view his/her surroundings.

The VR headset can inform the user of the object detection by means of the visual notification (e.g., a glowing region of a VR image) of a VR image. Based on the glowing region, the visual notification can inform the user that the object is in one of six different directions. Also, the VR headset can indicate a distance between the object and the VR headset according to a relative thickness of the glowing region and/or a relative brightness of the glowing region. The VR headset can give an audible notification indicating the distance between the object and the VR headset. A high-frequency audible notification can indicate information about an object close to the user and/or an object approaching the user.

Herein, a "threshold distance" can be used to control the visual and audible notifications. When the object is closer than the threshold distance (e.g., 6 feet), the visual and audible notifications can be activated. When the object is outside the threshold distance, the visual and audible notifications may not be activated.

FIG. 1 depicts surroundings of a user wearing a VR headset 110 according to an embodiment of the present disclosure.

Referring to FIG. 1, when the VR headset 110 is not operating in a camera mode, the user wearing the VR headset 110 cannot see a wall in front of the user. When the user is viewing contents (e.g., a video game), the user can see a VR video projected on a display inside the VR headset 110. The user, not recognizing an object in his/her surroundings, may walk toward the wall 150. Even through the user is sitting or standing in one spot, the user still cannot see another person or a pet which walks into the user.

Hence, the VR headset 110 can be configured to detect an object (e.g., the wall 150) and provide the user with visual and audible notifications relating to the object. The VR headset 110 can detect the object near the user using at least one sensor 120 functionally connected with the VR headset 110. The at least one sensor 120 can include a radio frequency (radar) sensor, an infrared sensor, an acoustic sensor, or a combination of two or more of those sensors.

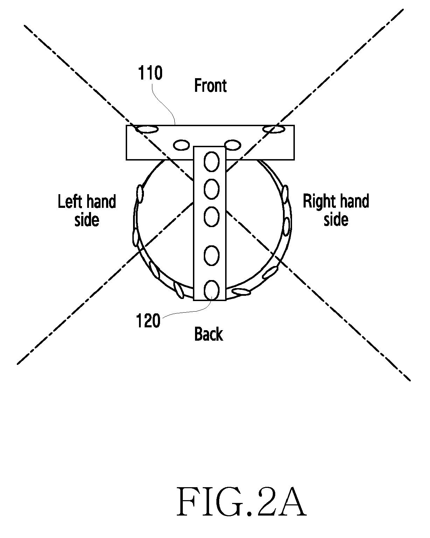

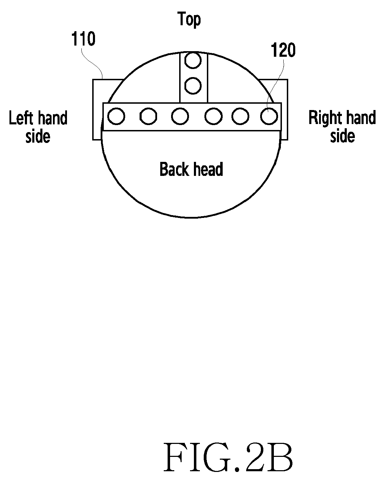

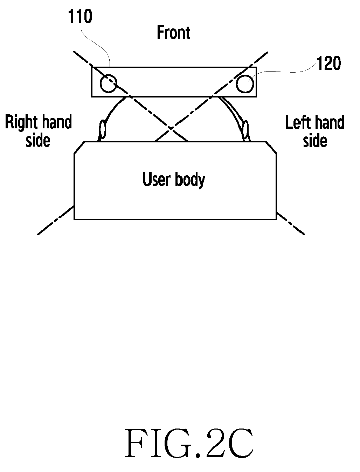

FIGS. 2A, 2B, and 2C depict a VR headset 110 including at least one sensor 120 according to an embodiment of the present disclosure.

FIG. 2A is a top view of a user wearing the VR headset 110. The at least one sensor 120 can be disposed, but not limited to, on the top of the VR headset 110, on a top strap crossing over the top of the user's head from the top of the VR headset 110 to the back of the user's head, and on a side strap running around the back of the user's head from a left side of the VR headset 110 to a right side of the VR headset 110. The at least one sensor 120 can be disposed in various manners.

FIG. 2B is a rear view of the user wearing the VR headset 110. The at least one sensor 120 can be disposed, but not limited to, on the top strap crossing over the top of the user's head from the top of the VR headset 110 to the back of the user's head, and on the side strap running around the back of the user's head from the left side of the VR headset 110 to the right side of the VR headset 110. The at least one sensor 120 can be disposed in various manners.

FIG. 2C is a bottom view of the user wearing the VR headset 110. The at least one sensor 120 can be disposed, but not limited to, on the bottom of the VR headset 110. The at least one sensor 120 can be disposed in various manners.

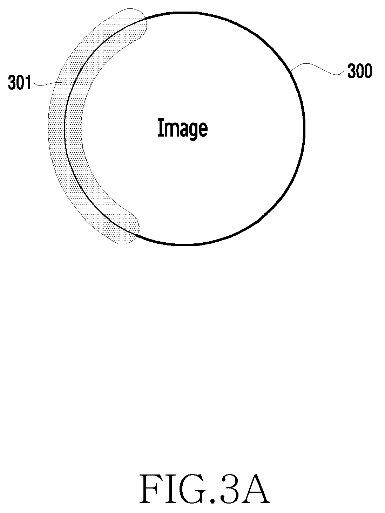

FIGS. 3A through 3F depict a screen 300 of a VR headset 110 notifying an object according to an embodiment of the present disclosure. A display of the VR headset 110 can display an indicator (e.g., a notification) in at least part of the screen 300 according to a location of a detected object. The indicator can be presented by lighting a region corresponding to the object location. Alternatively, the indicator can be presented by shading a region corresponding to the object location. Alternatively, the indicator can be presented by displaying a figure, graphs, or a text of predefined shape and color in a region corresponding to the object location.

Hereinafter, the indicator includes a glowing region by way of example. In FIGS. 3A through 3F, glowing regions (or extra bright regions or different color regions) can be used to indicate locations or directions of objects in vicinity of the user.

FIG. 3A depicts a screen 300 of a VR headset 110. The screen 300 can display a VR image viewed by the user. The screen 300 can display a glowing region 301 on a left edge of the screen 300. Using the glowing region 301, the screen 300 can display an object detected on the left of the user.

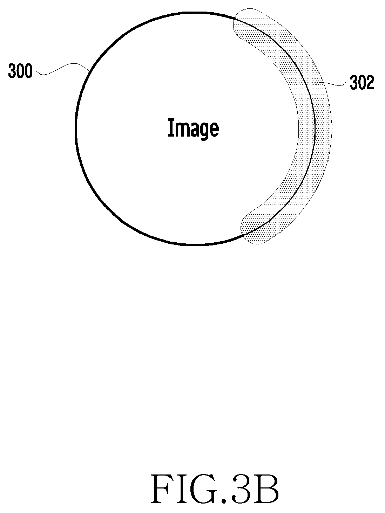

FIG. 3B depicts the screen 300 of the VR headset 110. The screen 300 can display a VR image viewed by the user. The screen 300 can display a glowing region 302 on a right edge of the screen 300. Using the glowing region 302, the screen 300 can display an object detected on the right of the user.

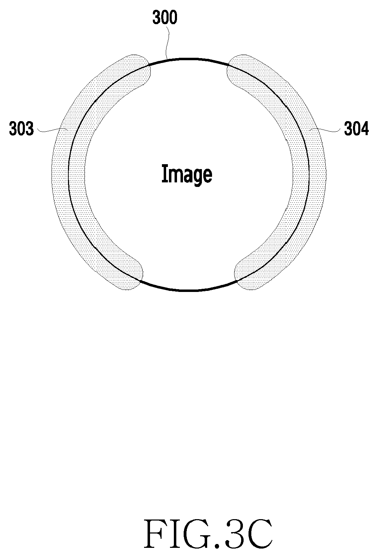

FIG. 3C depicts the screen 300 of the VR headset 110. The screen 300 can display a VR image viewed by the user. The screen 300 can display a glowing region 303 on a left edge of the screen 300 and a glowing region 304 on a right edge of the screen 300. Using the glowing regions 303 and 304, the screen 300 can display an object detected in front of the user.

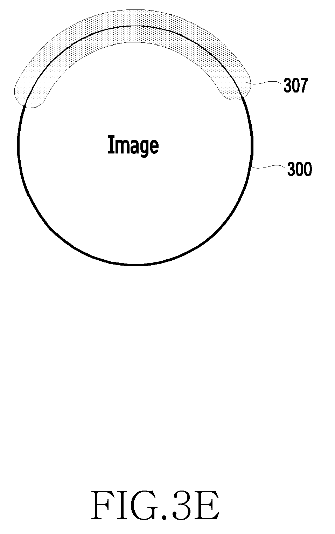

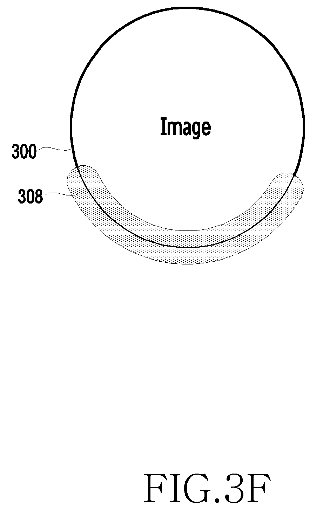

In some embodiments, the screen 300 can display the location or the direction of the object in front of the user using the glowing regions 303 and 304. The screen 300 can add extra brightness to the glowing regions 303 and/or 304 in comparison with the glowing regions of FIGS. 3A, 3B, 3E, and 3F. For example, when the object is in a left diagonal direction from the user, the screen 300 can display the left-edge glowing region 303 more brightly than the glowing region 304. For example, when the object is in a right diagonal direction from the user, the screen 300 can display the right-edge glowing region 304 more brightly than the glowing region 303.

In some other embodiments, the screen 300 can display the location or the direction of the object in front of the user using the glowing regions 303 and 304. The screen 300 can display the glowing regions 303 and/or 304 in different colors in comparison with the glowing regions of FIGS. 3A, 3B, 3E, and 3F. For example, when the object is in a left diagonal direction from the user, the screen 300 can display the left-edge glowing region 303 in a different color and display the glowing region 304 in an existing color. For example, when the object is in a right diagonal direction from the user, the screen 300 can display the right-edge glowing region 304 in a different color and display the glowing region 303 in an existing color.

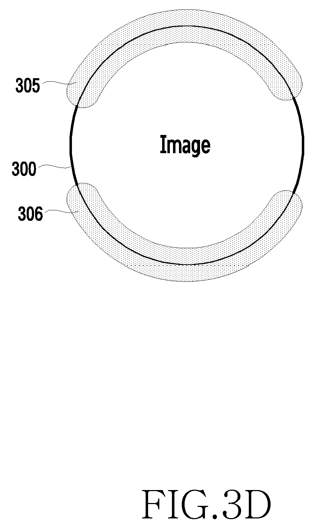

FIG. 3D depicts the screen 300 of the VR headset 110. The screen 300 can display a VR image viewed by the user. The screen 300 can display a glowing region 305 on an upper edge of the screen 300 and a glowing region 306 on a lower edge of the screen 300. Using the glowing regions 305 and 306, the screen 300 can display the object detected behind the user.

In some embodiments, the screen 300 can display the location or the direction of the object behind the user using the glowing regions 305 and 306. The screen 300 can add extra brightness to the glowing regions 305 and/or 306 in comparison with the glowing regions of FIGS. 3A, 3B, 3E, and 3F. For example, when the object is in a left diagonal direction from the user, the screen 300 can display the upper-edge glowing region 305 more brightly than the glowing region 306. For example, when the object is in a right diagonal direction from the user, the screen 300 can display the lower-edge glowing region 306 more brightly than the glowing region 305.

In some other embodiments, the screen 300 can display the location or the direction of the object behind the user using the glowing regions 305 and 306.The screen 300 can display the glowing regions 305 and/or 306 in different colors in comparison with the glowing regions of FIGS. 3A, 3B, 3E, and 3F. For example, when the object is in a left diagonal direction from the user, the screen 300 can display the upper-edge glowing region 305 in a different color and display the glowing region 306 in an existing color. For example, when the object is in a right diagonal direction from the user, the screen 300 can display the lower-edge glowing region 306 in a different color and display the glowing region 305 in an existing color.

FIG. 3E depicts the screen 300 of the VR headset 110. The screen 300 can display a VR image viewed by the user. The screen 300 can display a glowing region 307 on an upper edge of the screen 300. Using the glowing region 307, the screen 300 can display the object detected above the user.

FIG. 3F depicts the screen 300 of the VR headset 110. The screen 300 can display a VR image viewed by the user. The screen 300 can display a glowing region 308 on a lower edge of the screen 300. Using the glowing region 308, the screen 300 can display the object detected below the user.

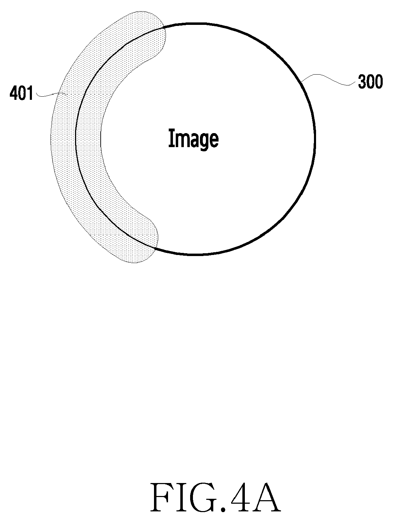

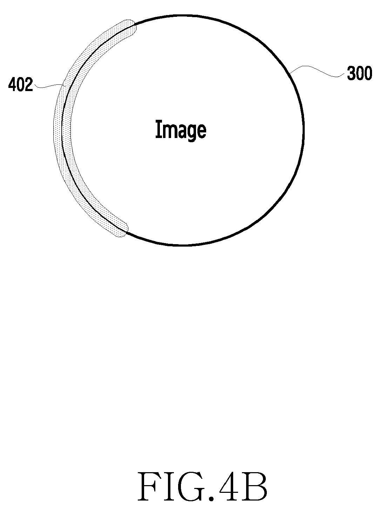

FIGS. 4A and 4B depict a screen 300 of a VR headset 110 displaying a notification based on a distance between an object and the VR headset 110 according to an embodiment of the present disclosure.

FIG. 4A depicts the screen 300 of the VR headset 110. The screen 300 can display a VR image viewed by the user. A glowing region 401 on a left edge of screen 300 is relatively thick, which indicates that an object detected on the left of the user is relatively close to the VR headset 110.

FIG. 4B depicts the screen 300 of the VR headset 110. The screen 300 can display a VR image viewed by the user. A glowing region 402 on a left edge of screen 300 is relatively thin, which indicates that an object detected on the left of the user is relatively far away from the VR headset 110.

In some embodiments, the screen 300 can modify a thickness of the glowing regions 401 and 402 so as to indicate a relative distance from the object. For example, when the object comes closer to the VR headset 110, the screen 300 can increase the thickness of the glowing regions 401 and 402. Based on the thickness change of the glowing regions 401 and 402, the user can recognize that the distance between the object and the VR headset 110 shortens.

In some other embodiments, the screen 300 can modify a brightness of the glowing regions 401 and 402 so as to indicate a relative distance from the object. For example, when the object comes closer to the VR headset 110, the screen 300 can increase the brightness of the glowing regions 401 and 402. Based on the brightness change of the glowing regions 401 and 402, the user can recognize that the distance between the object and the VR headset 110 shortens.

In some other embodiments, the screen 300 can modify the thickness and the brightness of the glowing regions 401 and 402 so as to indicate a relative distance from the object. For example, when the object comes closer to the VR headset 110, the screen 300 can increase both of the thickness and the brightness of the glowing regions 401 and 402. Based on the thickness and brightness changes of the glowing regions 401 and 402, the user can recognize that the distance between the object and the VR headset 110 shortens.

In some other embodiments, the screen 300 can modify a glowing period of the glowing regions 401 and 402 so as to indicate a relative distance from the object. For example, when the object comes closer to the VR headset 110, the screen 300 can shorten the glowing period of the glowing regions 401 and 402.

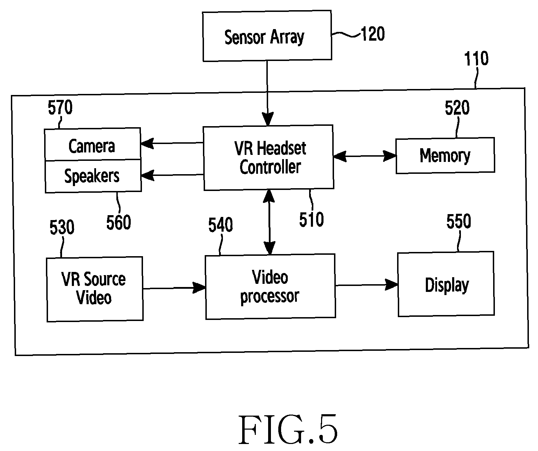

FIG. 5 is a block diagram of at least one sensor 120 and a VR headset 110 according to an embodiment of the present disclosure.

Referring to FIG. 5, the VR headset 110 can be functionally connected to one or more sensors 120 disposed on exterior surfaces or head straps of the VR headset 110. The VR headset 110 can further include a VR headset controller 510, a memory 520, a VR source video 530, a video processor 540, a display 550, speakers 560, and a camera 570.

The VR headset controller 510 can be a microprocessor or a microcontroller for controlling operations of the VR headset 510 by executing one or more application programs and an operating system program stored in the memory 520.

The video processor 540 can receive source video contents from the VR source video 530. The video processor 540 can display the source video contents on at least one screen of the display 550. The VR source video 530 can be an external VR video player connected to the VR headset 110 wirelessly or via a wire. The VR source video 530 can be an internal memory including part of the memory 520. The source video contents can be stored in the internal memory. In a camera mode, the VR headset controller 510 can control the video processor 540 to output surroundings of the user, instead of the source video contents, through the camera 570 so that the user can see his/her surroundings on the display 550.

The VR headset controller 510 can receive an output of the at least one sensor 120. Depending on which sensor detects an object closer than a threshold distance, the VR headset controller 510 can determine a direction, a distance, and a distance change from information (i.e., movement and/or speed) of the object. In response to the object, the VR headset controller 510 can control the video processor 540 to present at least one glowing region on the screen 300 as shown in FIGS. 3A through 3F and FIGS. 4A and 4B. Upon detecting the object, the VR headset controller 510 can control the speakers 560 to notify the object to the user using a sound (e.g., various tones). The VR headset controller 510 can control the speakers 560 to increase or decrease a frequency of the audible notification according to the distance change of the object. For example, a frequency increase of the tone can indicate that the object is coming closer to the user. A frequency decrease of the tone can indicate that the object gets far away from the user.

According to various embodiments, a VR headset can include a controller, and a display functionally connected with the controller. The display can display contents. When at least one sensor functionally connected with the VR headset detects an object within a designated area, the controller can notify the object detection. The display can display information relating to a distance between the VR headset and the detected object.

The VR headset can further include a speaker functionally connected with the VR headset. The controller can output a sound notifying the object detection through the speaker. The controller can control a frequency of the sound according to a distance between the VR headset and the detected object.

The display can display an indicator indicating the object detection. The indicator can be displayed in a region corresponding to a location of the detected object on a screen which displays the contents. The controller can control a brightness of the indicator according to a distance between the VR headset and the detected object. The indicator can include a text indicating at least one of location information of the detected object and distance information between the detected object and the VR headset.

The display can overlap and display an item relating to the object detection with the contents. The VR headset can further include a camera for generating an image of the detected image. The display can overlap and display the image of the detected object generated by the camera, with the contents.

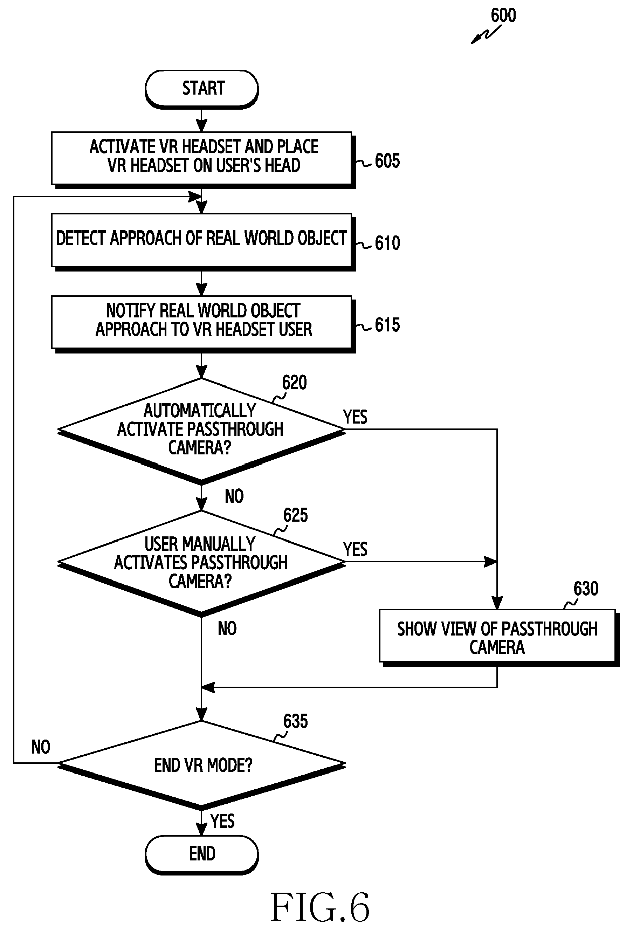

FIG. 6 is a flowchart 600 of an operating method of a VR headset 110 according to an embodiment of the present disclosure.

Referring to FIG. 6, in operation 605, the user activates the VR headset 110 and puts the VR headset 110 on his/her head. When the VR headset 110 is activated, the user can execute an application using the VR headset 110.

In step 610, the VR headset 110 can receive information about a detected object from at least one sensor 120. The VR headset 110 can receive the object information from the at least one sensor 120 on a periodic basis. The VR headset 110 can receive information of a plurality of objects from the at least one sensor 120. For example, when two objects are detected, the VR headset 110 can receive all of information of the objects from the at least one sensor 120.

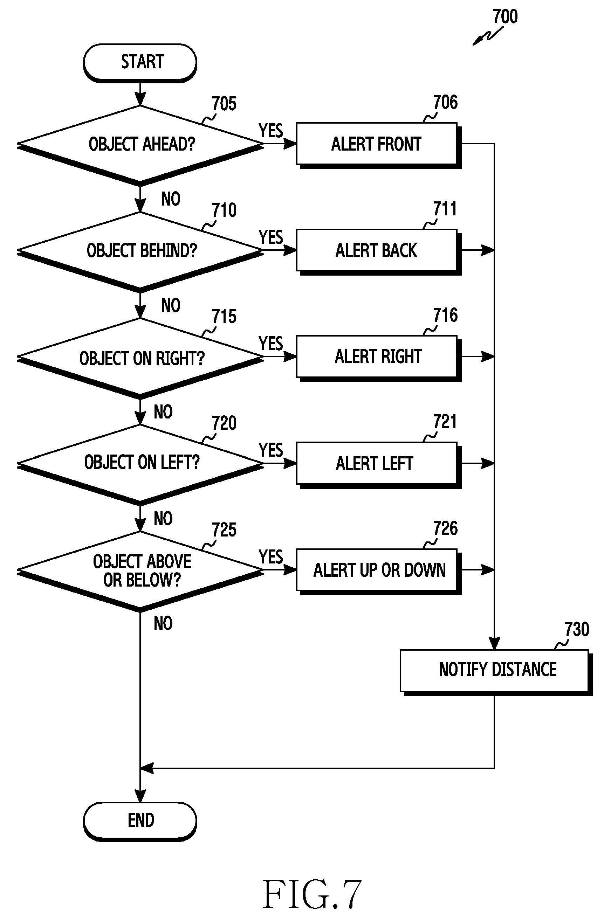

In step 615, when detecting the object within a threshold distance, the VR headset 110 can notify the object to the user. When the object moves, the VR headset 110 can notify movement direction and speed information of the object. Details of the operation 615 shall be explained in FIG. 7.

In step 620, upon detecting the object, the VR headset 110 can determine whether to automatically activate a passthrough camera. The passthrough camera can indicate a camera showing surroundings of the user. When automatically activating the passthrough camera, the VR headset 110 can end a VR video and display a view of the passthrough camera in operation 630. The VR headset 110 can show the view of the passthrough camera through the camera 570. When not automatically activating the passthrough camera, the VR headset 110 can determine whether the user manually activates the passthrough camera in operation 625. For example, the user can manually activate the passthrough camera by pressing an external button of the VR headset 110.

In step 625, the user can select whether to manually activate the passthrough camera. For example, the user can select whether to activate the passthrough camera using a pop-up window regarding the passthrough activation in a VR image. When the user manually activates the passthrough camera, the VR headset 110 can show the view of the passthrough camera in operation 630. The user can recognize the object through the view of the passthrough camera. When the user does not manually activate the passthrough camera, the VR headset 110 can determine whether to end a VR mode in operation 635. In some embodiments, the VR headset 110 can determine whether to change contents in the VR mode.

In step 630, the VR headset 110 can automatically show the view of the passthrough camera. The user can manually display the view of the passthrough camera. The passthrough camera can be functionally connected to the VR headset 110. For example, the passthrough camera can send the view of the passthrough camera to the VR headset 110 using various communication technologies (e.g., Long Term Evolution (LTE) or Wireless Fidelity (WiFi).

In step 635, the VR headset 110 can determine whether to end the VR mode. When not ending the VR mode, the VR headset 110 can return to operation 610. When the passthrough camera is activated, the VR headset 110 can overlap the view of the passthrough camera on the left top of the screen 300. When the VR mode ends, the VR headset 110 may not display the object information on the screen 300.

FIG. 7 is a flowchart 700 of another operating method of a VR headset 110 according to an embodiment of the present disclosure.

Referring to FIG. 7, the VR headset 110 can detect object approach using the at least one sensor 120. FIG. 7 illustrates details of the operation 615 of FIG. 6. That is, FIG. 7 illustrates a method of the VR headset 110 for notifying the object approach detected by the at least one sensor 120, to the user.

In step 705, the VR headset 110 can determine whether the object is in front of the user. The VR headset 110 can receive object information from the at least one sensor 120. Based on the information, the VR headset 110 can determine whether the object is in front of the user. When the object is in front of the user, the VR headset 110 can display the glowing regions 303 and 304 on the left edge and the right ledge of the screen 300. The user can recognize a location of the object based on the locations of the glowing regions 303 and 304. In operation 730, the VR headset 110 can display various notifications of a distance between the object and the VR headset 110 on the screen 300. For example, the VR headset 110 can display a visual notification of the distance on the screen 300. For example, the VR headset 110 can activate an audible notification of the distance. When the user does not need the distance information, the operation 730 can be omitted.

In step 710, when the object is not in front of the user, the VR headset 110 can determine whether the object is behind the user. When the object is behind the user, the VR headset 110 can display the glowing regions 305 and 306 on the upper edge and the lower ledge of the screen 300 in operation 711. In operation 730, the VR headset 110 can display various notifications of a distance between the object and the VR headset 110 on the screen 300.

In step 715, when the object is not behind the user, the VR headset 110 can determine whether the object is on the right of the user. When the object is on the right of the user, the VR headset 110 can display the glowing region 302 on the right edge of the screen 300 in operation 716. In operation 730, the VR headset 110 can display various notifications of a distance between the object and the VR headset 110 on the screen 300.

In step 720, when the object is not on the right of the user, the VR headset 110 can determine whether the object is on the left of the user. When the object is on the left of the user, the VR headset 110 can display the glowing region 301 on the left edge of the screen 300 in operation 721. In operation 730, the VR headset 110 can display various notifications of a distance between the object and the VR headset 110 on the screen 300.

In step 725, when the object is not on the left of the user, the VR headset 110 can determine whether the object is above or below the user. When the object is above or below the user, the VR headset 110 can display the glowing region 307 or 308 on the upper or lower edge of the screen 300 in operation 726. In operation 730, the VR headset 110 can display various notifications of a distance between the object and the VR headset 110 on the screen 300. When the object is neither above nor below the user, the VR headset 110 can determine whether to automatically activate the passthrough camera in operation 620 of FIG. 6. That is, the VR headset 110 can automatically activate the passthrough camera. By activating the passthrough camera, the VR headset 110 can notify the object to the user. While the operations 705, 710, 715, 720 and 725 are performed in series in FIG. 7, these operations can be performed in various orders or at the same time.

In step 730, the VR headset 110 can display various notifications of the distance between the object and the VR headset 110 on the screen 300. For example, the VR headset 110 can display the distance between the object and the VR headset 110 as a number on the screen 300. The number can change in real time according to the movement of the object. For example, the VR headset 110 can notify the distance between the object and the VR headset 110 to the user using a sound (e.g., "An object is detected 2 meters ahead") through the speakers 560. The sound can be a sound recorded by the user. After displaying various notifications of the distance between the object and the VR headset 110, the VR headset 110 can determine whether to automatically activate the passthrough camera in operation 620 of FIG. 6. That is, the VR headset 110 can automatically activate the passthrough camera and thus notify the object to the user.

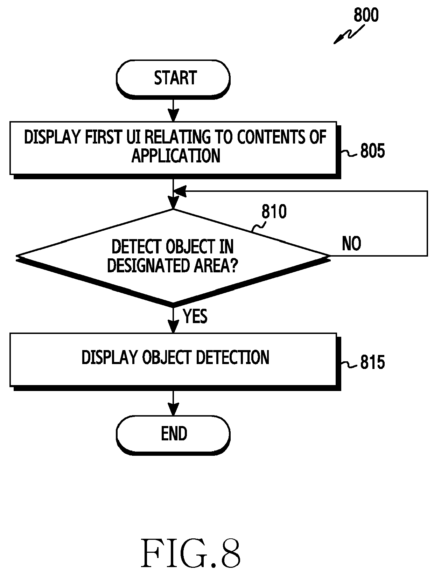

FIG. 8 is a flowchart 800 of yet another operating method of a VR headset 110 according to an embodiment of the present disclosure.

Referring to FIG. 8, in step 805, the VR headset 110 can display contents on the screen 300. For example, the VR headset 110 can display contents such as video executed by an electronic device which is functionally connected to the VR headset 110. For example, the VR headset 110 can display contents such as video executed by the VR headset 110.

In step 810, the VR headset 110 can determine (or identify) whether an object is detected in a designated area. The VR headset 110 can determine whether the object is detected in the designated area, based on information received from the at least one sensor 120 functionally connected with the VR headset 110. The at least one sensor 120 can include a calculation device for processing a value measured from the object. In some embodiments, when the at least one sensor 120 detects the object around the user, the received information can be received from the at least one sensor 120 on a periodic basis. In this case, the at least one sensor can periodically send to the VR headset 110, one of information indicating that the object is detected around the user and information indicating that no object is detected around the user. When detecting the object, the VR headset 110 can proceed to operation 815.

In step 815, the VR headset 110 can display the object detection on the screen 300. The VR headset 110 can display the object detection using various displaying methods for notifying the object around the user, to the user. In some embodiments, the VR headset 110 can display a text indicating the object location on the screen 300. For example, when the object is on the left of the user, the VR headset 110 can display a text "Object detected on the left". The text can be preset by the user. In some other embodiments, the VR headset 110 can overlap and display an item indicating the object location with the contents. For example, when the object is detected on the right of the user, the VR headset 110 can overlap and display the item on the right edge of the displayed contents. The item (e.g., an image, an icon, an emoticon, a text, a number, a special character) can be overlapped and displayed with the contents. Herein, the item can be displayed in a preset region. That is, the item can be displayed in a fixed region regardless of the object location.

In some other embodiments, the VR headset 110 can display the object detection using a sound. For example, the VR headset 110 can notify the object to the user through its speakers 560. The object detection can be displayed using the sound in various manners. For example, the VR headset 110 can notify the object location to the user using surround sounding. The surround sounding can output a sound through four separate speakers and thus output the sound to the user from every direction. For example, when the object moves from left to right based on the user, the VR headset 110 can output a sound such that the user can hear the sound moving from left to right. For example, the VR headset 110 can broadcast a sound message to the user through the speakers 560. When detecting an object moving from user's left to right, the VR headset 110 can output a sound "An object moving from left to right is detected" to the user through the speaker.

In some other embodiments, the VR headset 110 can display a glowing region on an edge of the screen 300 according to the object location. For example, the VR headset 110 can adjust a location of the glowing region on the edge of the screen 300 according to the movement of the object. Hence, the user can recognize the object movement in real time. For example, when detecting two or more objects, the VR headset 110 can identify the objects using glow regions of different colors.

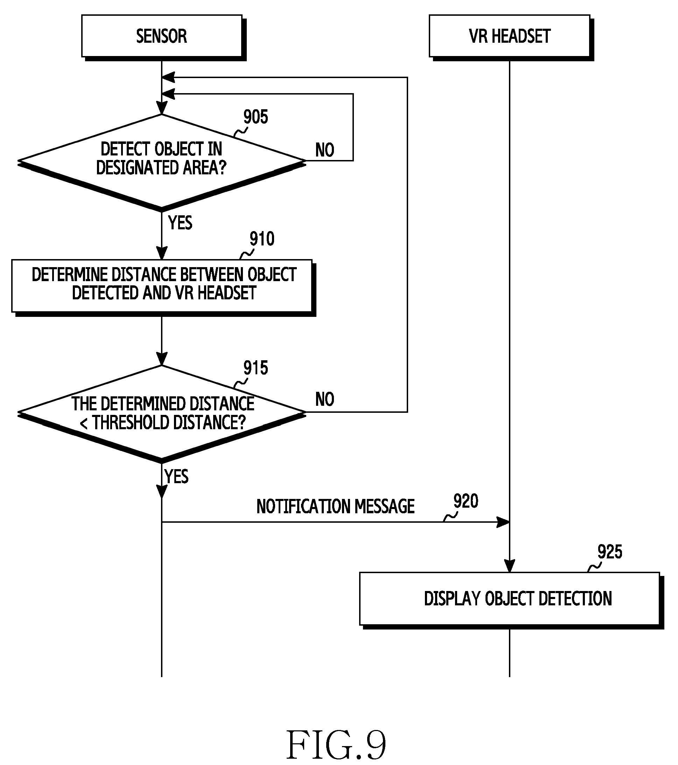

FIG. 9 is a signal flow diagram between at least one sensor 120 and a VR sensor 110 according to an embodiment of the present disclosure.

Referring to FIG. 9, in step 905, the at least one sensor 120 can detect an object in a designated area of user surroundings. The object detection can indicate that an object exists in the designated area. Also, the object detection can indicate identifying an object. For example, when a child comes toward the user, the at least one sensor 120 can recognize the child as an object. For example, when a child comes toward the user, the at least one sensor 120 can analyze appearance and behavior of the object and thus identify the object as a child. In some embodiments, the sensors can detect the object in sequence or at the same time. For example, the plurality of the sensors can detect the object in order of front, back, left, right, top, and bottom. For example, the plurality of the sensors can periodically detect the object at the same time. Upon detecting the object, the at least one sensor 120 can send object information to the VR headset 110. When detecting no object, the at least one sensor 120 can attempt to detect an object. The object detection of the at least one sensor 120 can correspond to the operation 810 of FIG. 8.

In step 910, when detecting the object, the at least one sensor 120 can determine a distance between the object and the VR headset 110. The distance between the object and the VR headset 110 can be determined in various manners. For example, the at least one sensor 120 can determine the distance between the object and the VR headset 110 by use of infrared light. That is, when the at least one sensor 120 can emit the infrared light, the at least one sensor 120 can determine the distance between the object and the VR headset 110 by measuring the time taken by the emitted infrared light to be reflected by the object and return to the at least one sensor 120. For example, the at least one sensor 120 can determine the distance between the object and the VR headset 110 by using a Global Positioning System (GPS). That is, the at least one sensor 120 can receive an object location and distance information between the object and the VR headset 110 from an artificial satellite, and thus determine the object location and the distance between the object and the VR headset 110. When the object moves, the at least one sensor 120 can determine movement direction and speed of the object.

In step 915, the at least one sensor 120 can determine whether the determined distance is shorter than a threshold distance. The threshold distance can be predefined by the VR headset 110 or the user. The threshold distance can be determined in consideration of a space where the user can move. When the determined distance is longer than the threshold distance, the at least one sensor 120 can attempt to detect the object back in operation 905. It can be advantageous to attempt the object detection when a new object enters the threshold distance or when an object outside the threshold distance enters the threshold distance.

In step 920, when the determined distance is shorter than the threshold distance, the at least one sensor 120 can send a notification message to the VR headset 110. The notification message can include information about the object location and the distance between the object and the VR headset 110. Also, when the object moves, the notification message can include information about movement direction and speed of the object.

In step 925, the VR headset 110 can receive the notification message from the at least one sensor 120 and then display the object detection on the screen 300. The VR headset 110 can display various information of the object on the screen 300. For example, the VR headset 110 can display the object location and the distance between the object and the VR headset 110 on the screen 300. For example, the VR headset 110 can display the movement direction and speed of the object. Hence, the user can recognize the object within the threshold distance. The operation 925 of FIG. 9 can correspond to the operation 815 of FIG. 8.

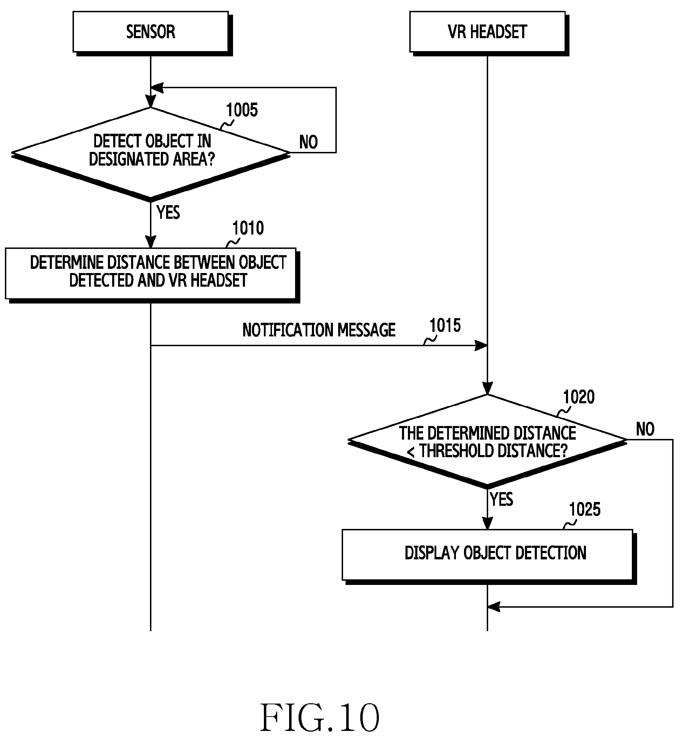

FIG. 10 is another signal flow diagram between at least one sensor 120 and a VR sensor 110 according to an embodiment of the present disclosure.

Referring to FIG. 10, in step 1005, the at least one sensor 120 can detect an object in a designated area of user surroundings. When detecting the object, the at least one sensor 120 can send information about the object to the VR headset 110. The information can include a location, a type, and a temperature of the object. In some embodiments, when the temperature of the object is high, the VR headset 110 can display an image of the object in red. When the temperature of the object is low, the VR headset 110 can display an image of the object in blue. When detecting no object, the at least one sensor 120 can attempt to detect an object on a periodic basis.

In step 1010, when detecting the object, the at least one sensor 120 can determine a distance between the object and the VR headset 110. The distance can be a distance between the object and the at least one sensor or a distance between the object and the user. Various criteria for determining the distance can be defined by the user. For example, the user can configure the VR headset 110 to determine the distance based on an electronic device (e.g., a set-top box) functionally connected with the VR headset 110. The operation 1010 of FIG. 10 can correspond to the operation 910 of FIG. 9.

In step 1015, the at least one sensor 120 can send a notification message to the VR headset 110. The notification message can include information about an object location and the distance between the object and the VR headset 110. The notification message can be sent from the at least one sensor 120 to the VR headset 110 wirelessly or via a wire. For example, when the at least one sensor 120 and the VR headset 110 are functionally connected with each other, the at least one sensor 120 can send the notification message to the VR headset 110 using a Bluetooth function. The operation 1015 of FIG. 10 can correspond to the operation 920 of FIG. 9.

In step 1020, after receiving the notification message from the at least one sensor 120, the VR headset 110 can determine whether the determined distance is shorter than a threshold distance. The threshold distance can be predefined by the VR headset 110 or the user. For example, when a space for using the VR headset 110 is wide, the user can lengthen the threshold distance. When a space for using the VR headset 110 is narrow, the user can shorten the threshold distance. When the determined distance is longer than the threshold distance, the at least one sensor 120 can attempt to detect an object back in operation 1005. The operation 1020 of FIG. 10 can correspond to the operation 915 of FIG. 9.

In step 1025, when the determined distance is shorter than the threshold distance, the VR headset 110 can display the object location and the distance between the object and the VR headset 110 on the screen 300. The user can recognize the object location and the distance between the object and the VR headset 110. When the user recognizes the object, the VR headset 110 can remove the displaying from the screen 300. The operation 1025 of FIG. 10 can correspond to the operation 925 of FIG. 9.

According to various embodiments, a method for operating a VR headset can include displaying contents, and, when detecting an object within a designated area through at least one sensor functionally connected with the VR headset, notifying the object detection. The method can further include displaying information about a distance between the VR headset and the detected object.

Notifying the object detection can include outputting a sound notifying the object detection. The method can further include controlling a frequency of the sound according to a distance between the VR headset and the detected object.

Notifying the object detection can include displaying an indicator indicating the object detection. The indicator can be displayed in a region corresponding to a location of the detected object on a screen which displays the contents. The method can further include controlling a brightness of the indicator according to a distance between the VR headset and the detected object. The indicator can include indicating at least one of location information of the detected object and distance information between the detected object and the VR headset.

Notifying the object detection can include overlapping and displaying an item relating to the object detection with the contents. The method can further include overlapping and displaying an image of the detected object generated by a camera, with the contents.

As set forth above, the user, who is wearing the VR headset, can recognize the approach of the object.

Although the present disclosure has been described with an exemplary embodiment, various changes and modifications may be suggested to one skilled in the art. It is intended that the present disclosure encompass such changes and modifications as fall within the scope of the appended claims.

## Claims

1. A Virtual Reality (VR) headset comprising:
a controller; and
a display operatively coupled with the controller,
wherein the display displays contents, and
when at least one sensor operatively coupled with the VR headset detects an object within a designated area, wherein the controller notifies that the object is detected.

2. The VR headset of claim 1, wherein the display is further configured to display information relating to a distance between the VR headset and the detected object.

3. The VR headset of claim 1, further comprising:
a speaker operatively coupled with the controller,
wherein the controller is further configured to output a sound notifying the object detection through the speaker.

4. The VR headset of claim 3, wherein the controller is further configured to control a frequency of the sound according to a distance between the VR headset and the detected object.

5. The VR headset of claim 1, wherein the display is further configured to display an indicator indicating that the object is detected.

6. The VR headset of claim 5, wherein the indicator is displayed in a region corresponding to a location of the detected object on a screen on which the contents is displayed.

7. The VR headset of claim 5, wherein the controller is further configured to control a brightness of the indicator according to a distance between the VR headset and the detected object.

8. The VR headset of claim 7, wherein the indicator comprises a text indicating at least one of information regarding a location of the detected object and information regarding the distance between the detected object and the VR headset.

9. The VR headset of claim 1, wherein the display superimposes an item relating to the object detection with the contents.

10. The VR headset of claim 1, further comprising:
a camera for generating an image of the detected image,
wherein the display superimposes the image of the detected object generated by the camera, with the contents.

11. A method for operating a Virtual Reality (VR) headset, comprising:
displaying contents; and
when detecting an object within a designated area through at least one sensor operatively coupled with the VR headset, notifying that the object is detected.

12. The method of claim 11, further comprising:
displaying information regarding a distance between the VR headset and the detected object.

13. The method of claim 11, wherein notifying that the object is detected comprises outputting a sound notifying that the object is detected.

14. The method of claim 13, further comprising:
controlling a frequency of the sound according to a distance between the VR headset and the detected object.

15. The method of claim 11, wherein notifying that the object is detected comprises displaying an indicator indicating that the object is detected.
